# FASCICULE DE BREVET EUROPEEN

(11) **EP 3 762 595 B1**
(45) Date de publication et mention de la délivrance du brevet: **26.07.2023**
(21) Numéro de dépôt: 19713106.3
(22) Date de dépôt: 06.03.2019
(51) Int. Cl.: F02C 7/045, F02K 1/82, F02C 6/08, F02C 7/32, G10K 11/175, G10K 11/16, G10K 11/178, B64D 33/02, F04D 29/66

(54) **DISPOSITIF ACTIF D'ATTÉNUATION DES ÉMISSIONS ACOUSTIQUES POUR UN TURBORÉACTEUR COMPORTANT DES TURBINES CONTRÔLÉES**
AKTIVE VORRICHTUNG ZUR DÄMPFUNG VON AKUSTISCHEN EMISSIONEN FÜR EIN STRAHLTRIEBWERK MIT KONTROLLIERTEN TURBINEN
ACTIVE DEVICE FOR ATTENUATING ACOUSTIC EMISSIONS FOR A TURBOJET COMPRISING CONTROLLED TURBINES

(30) Priorité: 08.03.2018 FR 1852024
(43) Date de publication de la demande: 13.01.2021
(73) Titulaire: Safran Nacelles, 76700 Gonfreville-l'Orcher (FR)
(72) Inventeur: RAMI, Jean-Paul, 76700 GONFREVILLE L'ORCHER (FR); HURLIN, Hervé, 76700 GONFREVILLE L'ORCHER (FR); GOULARD, Jean-Baptiste, 76700 GONFREVILLE L'ORCHER (FR); VERSAEVEL, Marc, 76700 GONFREVILLE L'ORCHER (FR); MICHEAU, Philippe, 76700 GONFREVILLE L'ORCHER (FR); DRANT, Julien, 76700 GONFREVILLE L'ORCHER (FR); ALLARD, Ambre, 76700 GONFREVILLE L'ORCHER (FR); BERRY, Alain, 76700 GONFREVILLE L'ORCHER (FR); ROBERT, Raymond, 76700 GONFREVILLE L'ORCHER (FR)
(74) Mandataire: Germain Maureau
(86) Numéro de dépôt international: PCT/FR2019/050496
(87) Numéro de publication internationale: WO 2019/171000

(56) Documents cités:
- FR-A1- 2 370 170
- US-A- 5 340 271
- US-A- 5 833 433

## Description

La présente invention concerne un dispositif actif d'atténuation des émissions acoustiques tonales pour un turboréacteur d'aéronef, ainsi qu'une nacelle de turboréacteur équipée d'un tel dispositif.

Les turboréacteurs d'aéronef reçoivent de l'air frais venant du côté amont, et rejettent du côté aval des gaz chauds issus de la combustion du carburant délivrant une poussée. Pour les turboréacteurs à double flux, des aubes de soufflante disposées autour de la motorisation génèrent un flux secondaire important d'air froid le long d'une veine annulaire passant entre ce moteur et une nacelle l'entourant, qui ajoute une poussée élevée.

Les différentes parties tournantes dans les flux d'air chaud et d'air froid génèrent des vibrations acoustiques constituant des sources sonores que l'on cherche à atténuer pour réduire les nuisances.

En particulier afin d'augmenter les performances des turboréacteurs, on tend à réduire la vitesse de rotation de la soufflante et le nombre d'aubes, ce qui a pour conséquence de diminuer la fréquence fondamentale des ondes acoustiques. On réalise aussi une augmentation du taux de dilution de l'air, qui donne au bruit tonal de la soufflante une part plus importante par rapport aux autres sources de bruit de la motorisation, notamment le bruit de jet qui se divise en deux jets concentriques, le chaud au centre et le froid autour.

Un type de système passif connu pour atténuer les vibrations acoustiques, présenté notamment par le document FR-A1-3029831, utilise des panneaux acoustiques garnissant l'intérieur de surfaces recevant des ondes sonores, comprenant une peau extérieure micro-poreuse disposée devant des cellules fermées constituant des résonateurs, appelés résonateurs de « Helmholtz ».

En ajustant la profondeur de la cavité au quart d'une longueur d'onde d'une fréquence nominale, on obtient une atténuation acoustique centrée sur cette fréquence.

Cette solution passive apporte une efficacité pour les vibrations proches de la fréquence nominale, mais est peu efficace au-delà. De plus avec l'augmentation des basses fréquences des émissions acoustiques des motorisations modernes, il faut augmenter la profondeur des cellules, et donc l'épaisseur des panneaux qui peut atteindre 50 à 80mm, ce qui pose des problèmes de masse et d'encombrement.

Par ailleurs différents systèmes actifs d'atténuation des ondes acoustiques sont connus. Un type de système actif connu utilise des haut-parleurs ou des amplificateurs piézo-électriques, contrôlés par un courant électrique produit à partir de signaux donnés par des microphones mesurant la fréquence, l'intensité et la phase des émissions sonores, afin de générer des vibrations acoustiques en interférence permettant d'atténuer ces émissions sonores.

Ces systèmes nécessitant une puissance élevée, posent des problèmes de masse et consomment une énergie électrique importante. Ils sont difficilement intégrables dans une nacelle de turboréacteur.

D'autres dispositifs de l'art antérieur sont décrits dans les documents FR2370170 A1 et US5833433 A.

La présente invention a notamment pour but de résoudre ces problèmes présentés par l'art antérieur.

Elle propose à cet effet un dispositif actif d'atténuation des émissions acoustiques tonales d'une nacelle de turboréacteur d'aéronef selon la revendication 1.

Un avantage de ce dispositif actif est qu'à partir d'une source d'air sous pression, prélevant par exemple un débit sur la motorisation du turboréacteur, ou sur la veine de flux secondaire d'un turboréacteur à double flux, on obtient en sortie du jet d'air du dispositif un champ acoustique secondaire qui interfère avec le champ acoustique primaire dans la veine du turboréacteur afin d'atténuer la puissance acoustique rayonnée en dehors de la nacelle. Le résultat est une atténuation de l'émission acoustique du turboréacteur.

On notera que par la suite d'une manière générale, l'expression flux d'air comprend tous types de débit de gaz, pouvant comporter notamment des gaz de combustion.

Le dispositif actif d'atténuation des émissions acoustiques tonales selon l'invention peut comporter une ou plusieurs des caractéristiques suivantes, qui peuvent être combinées entre elles.

Avantageusement, le dispositif actif d'atténuation des émissions acoustiques tonales comporte des capteurs de pressions acoustiques (dits microphones) qui permettent de calculer en temps réel les consignes de vitesse de rotation et de position angulaire par rapport au temps des éléments rotatifs ou hacheurs ainsi que la consigne de la valve de régulation de débit, tout cela afin de calibrer respectivement en fréquence, en phase et en amplitude l'onde acoustique générée.

Avantageusement, le dispositif actif d'atténuation des émissions acoustiques tonales comporte des moyens de traitement d'une information configurés pour donner la position angulaire instantanée de la soufflante du turboréacteur par rapport au référentiel de la nacelle. Ce dispositif connaît ainsi la phase et la fréquence exacte principale de l'onde acoustique générée par les aubes de ses soufflantes.

Avantageusement, chaque dispositif actif d'atténuation des émissions acoustiques tonales comporte un rotor comprenant des ouvertures de passage d'air permettant de hacher le débit en sortie du dispositif. Le passage devant chaque fenêtre provoque une pulsation sur le débit d'air de sortie.

En particulier, le rotor peut former un tambour tournant suivant son axe, présentant une face transversale équipée d'ouvertures pour le passage de l'air dans le tambour, les ouvertures étant réparties sur le contour cylindrique de ce tambour.

En particulier, le rotor du dispositif actif d'atténuation des émissions acoustiques tonales peut être entraîné par un moteur électrique, ou un moteur pneumatique comportant un frein électromagnétique de régulation de vitesse.

Avantageusement, chaque dispositif actif d'atténuation des émissions acoustiques tonales requiert une vanne de régulation de débit disposée en amont afin de moduler l'amplitude de hachage du débit.

Avantageusement, un hacheur d'écoulement peut alimenter une ou plusieurs ou la totalité des sorties d'air pulsé dans la veine du turboréacteur via un circuit de distribution pneumatique.

Avantageusement, les sorties d'air pulsé comportent en aval un manchon de sortie présentant une géométrie de passage du de l'écoulement d'air de sortie qui est réglable en longueur.
Avantageusement, les sorties d'air pulsé comportent en aval un dispositif d'obstruction qui est réglable. Avantageusement, chaque sortie d'écoulement d'air pulsé comporte un diffuseur comprenant une fixation au dos d'une paroi, pour diffuser le débit d'air pulsé devant cette paroi.

L'invention a aussi pour objet une nacelle de turboréacteur d'aéronef, comportant un dispositif actif d'atténuation des émissions acoustiques tonales (de la puissance acoustique rayonnée) comprenant l'une quelconque des caractéristiques précédentes.

Avantageusement, le conduit de circulation comporte une entrée d'air prélevé sur un flux primaire de la motorisation du turboréacteur, sur un flux secondaire donné par une soufflante d'un turboréacteur à double flux, ou sur une autre source comprenant un compresseur, un surpresseur, ou un accumulateur d'air comprimé.

Avantageusement, le dispositif actif d'atténuation des émissions acoustiques tonales comporte des diffuseurs de débit d'air pulsé répartis suivant des couronnes disposées transversalement dans la nacelle, en amont ou en arrière d'une soufflante d'un turboréacteur à double flux.

Avantageusement, le dispositif actif d'atténuation des émissions acoustiques tonales comporte des microphones répartis suivant des couronnes disposées transversalement dans la nacelle, en amont ou en arrière des sorties d'écoulement pulsé.

D'autres caractéristiques et avantages de l'invention ressortiront à la lecture de la description qui suit, donnée uniquement à titre d'exemple, en référence aux figures annexées suivantes :
- la figure 1 est un schéma de principe d'atténuation active du bruit d'un turboréacteur selon l'invention ;
- la figure 2 est un schéma d'un dispositif actif d'atténuation des émissions acoustiques tonales de hachage d'un écoulement par volet rotatif, générateur d'écoulement pulsé ;
- la figure 3 présente en vue éclatée un dispositif actif d'atténuation des émissions acoustiques tonales de hachage avec rotor à tambour comportant des ouvertures de passage de l'écoulement de l'air;
- la figure 4 est un schéma en coupe axiale d'un turboréacteur à double flux équipé de ce dispositif de contrôle actif de la puissance acoustique rayonnée ; et
- la figure 5 présente des hacheurs implantés sur une veine d'air froid du turboréacteur.

Pour plus de clarté, les éléments identiques ou similaires sont repérés par des signes de référence identiques sur l'ensemble des figures.

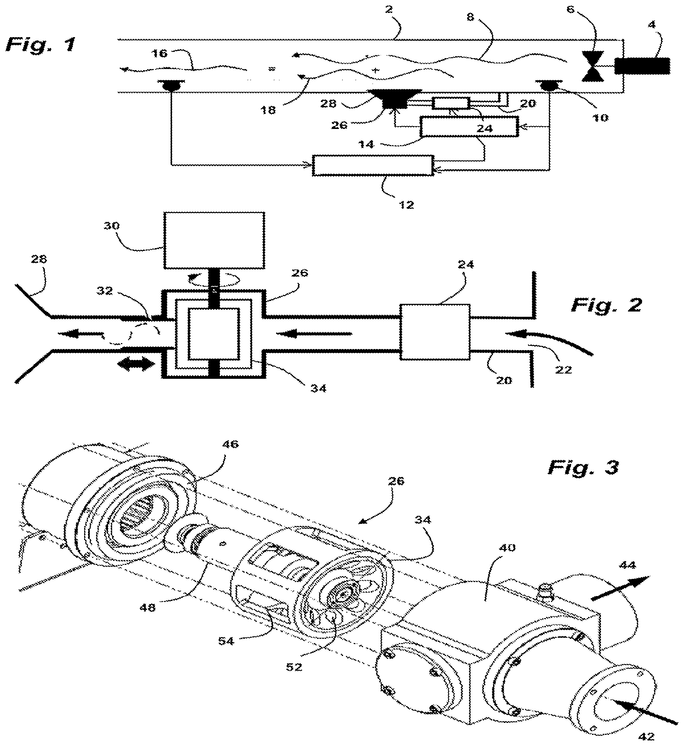

Les figures 1 et 2 présentent une veine de flux 2 canalisant un flux d'air principal sous pression 8 généré par une soufflante 6 actionnée par une motorisation 4, présentant des vibrations acoustiques que l'on cherche à atténuer.

Un conduit de circulation 20 comporte une entrée d'air 22 disposé sur la paroi de la veine de flux 2, recevant un débit d'air sous pression prélevé sur ce flux, puis successivement une vanne de régulation de débit 24 qui délivre ce débit d'air à un hacheur 26 se comportant comme un système de pulsation, puis un diffuseur 28 débouchant sur la paroi de la veine de flux.

L'élément rotatif 26 qui hache le débit d'air forme un générateur d'écoulement pulsé, il comporte un rotor 34 entraîné par l'actionneur 30, présentant des cavités constituant le système de hachage, dont la vitesse de rotation et la phase sont contrôlées.

Le débit d'air passe ensuite par un manchon ajustable 32 disposé en sortie de l'élément rotatif 26, présentant une géométrie de passage de ce débit d'air réglable, qui délivre ce débit au diffuseur 28.

On notera que la puissance acoustique sortant par le diffuseur 28 provient principalement du débit d'air prélevé par l'entrée d'air 22 dans le flux d'air principal. L'élément rotatif 26 réalise seulement une modulation de l'instationnarité périodique du débit d'air entrant.

Le diffuseur 28 délivre un débit d'air pulsé générant une onde acoustique (champ secondaire) 18, à la fréquence du champ primaire à atténuer provenant du flux d'air principal sous pression 8, pour obtenir un flux d'air sortant 16 moins bruyant, c'est-à-dire présentant une réduction de la puissance acoustique rayonnée hors nacelle pour cette fréquence fondamentale.

Des microphones 10 ou 16 constituant des systèmes de mesure des pressions acoustiques dans la nacelle, délivre des données représentant notamment la fréquence, l'amplitude et la phase du champ résiduel, à un algorithme de contrôle 12, et à un contrôleur 14 recevant des données de cet algorithme.

En particulier les microphones 10 ou 16 réalisent une boucle de rétroaction pour reproduire une impédance acoustique virtuelle locale équivalente à une loi locale entre la pression acoustique et la consigne donnée à chaque source pneumatique tonale.

Le contrôleur 14 contrôle la vanne de régulation de débit 24 pour ajuster la pression et le débit d'air moyen délivré à l'élément rotatif 26, et contrôle le moteur 30 avec son encodeur afin d'ajuster la vitesse de rotation du rotor 34 et son calage angulaire, de manière à générer dans son débit de sortie.

Le manchon ajustable de sortie 32 permet de compléter des caractéristiques du débit d'air de sortie.

A cet effet, le manchon ajustable 32 peut être ajusté dans sa longueur de sorte qu'il forme en partie une canalisation ajustable en longueur entre l'élément rotatif 26 ou hacheur 26 et le diffuseur 28.

Le manchon 32 permet alors de faire varier cette longueur de façon à ajuster la canalisation en fonction de la fréquence délivrée par l'élément rotatif ou hacheur 26 afin de maximiser la puissance sonore rayonnée en sortie de diffuseur 28.

La variation de longueur de la canalisation est avantageusement au minimum d'une demi longueur d'onde de la fréquence la plus basse délivrée par l'élément rotatif 26.

Selon une série de caractéristiques pouvant être prises seuls ou en combinaison :
- la liaison entre le manchon ajustable de sortie 32 et l'élément rotatif 26 est une liaison encastrement,
- la liaison entre le diffuseur 28 et le manchon ajustable de sortie 32 est une liaison glissière,
- la liaison glissière peut avantageusement être réglée et bloquée en translation.

Ces caractéristiques permettent de moduler la puissance sonore en sortie du diffuseur 28.

Le réglage en translation du manchon 32 peut être soit calibré en usine, soit contrôlé grâce à un actionneur électrique.

Un tel actionneur peut être avantageusement du type solénoïde et commandé par une boucle d'asservissement en amplitude.

Lorsque le réglage en translation du manchon 32 est contrôlé grâce à un actionneur électrique, les mesures effectuées par les microphones 10, 16 et qui sont situés en aval du champ sonore sont traitées en temps réel par l'algorithme de contrôle 12 et le contrôleur 14, ceci afin d'optimiser l'amplitude sonore du contre-bruit issu du diffuseur 28. On comprendra que le contre-bruit résulte du bruit à atténuer.

En variante on peut utiliser d'autres sources de pression d'air pour alimenter le conduit de circulation 20, comprenant par exemple un flux primaire de la motorisation du turboréacteur, venant de sa turbine ou d'un étage de son compresseur, ou venant d'un compresseur d'air spécifique entraîné par un moteur électrique, d'un surpresseur ou d'un accumulateur de pression d'air.

La figure 3 présente un élément rotatif 26 comportant un boîtier 40 présentant une entrée axiale 42 recevant le débit d'air d'entrée, et une sortie latérale 44 délivrant le débit d'air de sortie.

Le rotor 34 forme un tambour disposé suivant l'axe de rotation, comportant un flasque tourné vers l'entrée 42 présentant une succession de perçages 52 de manière à former une grande perméabilité à cet air qui rentre dans le tambour. Le contour du tambour présente six ouvertures rectangulaires formant des fenêtres 54 régulièrement réparties, allongées parallèlement à l'axe, qui comportent chacune une largeur sensiblement égale à la largeur de la paroi entre deux ouvertures.

Le rotor 34 se prolonge du côté opposé à l'entrée 42 par un induit 48 engagé dans un stator 46 formant un inducteur, constituant un moteur électrique permettant de contrôler la vitesse de rotation de ce rotor ainsi que son calage angulaire donnant sa phase.

De cette manière chaque fenêtre 54 se trouve successivement en face de la sortie 44, en formant un hacheur de débit qui donne dans le débit de sortie d'air une pulsation correspondant à la fréquence de passage de ces ouvertures, avec un phasage correspondant au calage angulaire de ces ouvertures.

En variante le rotor 34 peut être entraîné par tout autre système de motorisation, comme un moteur pneumatique alimenté par une dérivation d'air venant du turboréacteur, et freiné par un frein électromagnétique pour ajuster sa vitesse de rotation.

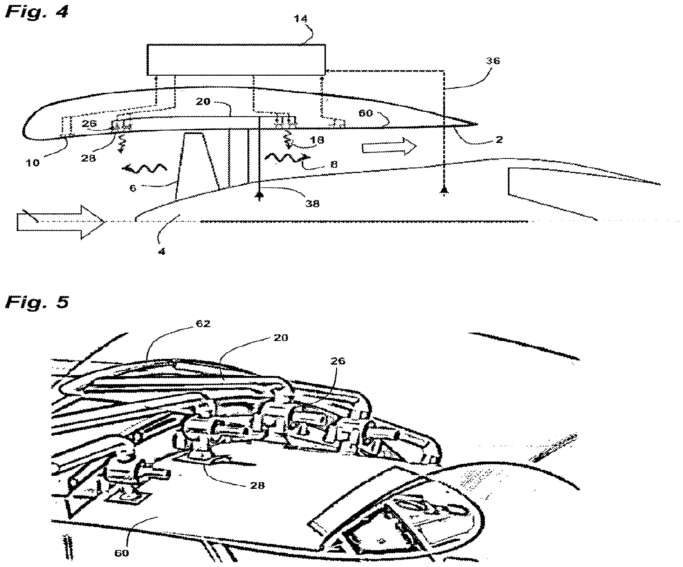

Les figures 4 et 5 présentent un débit d'air sous pression 38 prélevé directement sur la motorisation du turboréacteur, qui alimente les éléments rotatifs 26 disposées autour de la paroi extérieure 60 de l'entrée d'air ou de la veine annulaire d'air froid, en formant autour de la nacelle à la fois en amont et en aval de la soufflante 6, un ensemble de deux couronnes parallèles proches l'une de l'autre.

La motorisation du turboréacteur délivre aussi au contrôleur 14 une information 36 donnant l'angle de rotation, ce qui permet de connaître directement la fréquence de différentes émissions acoustiques, notamment des aubes de la soufflante 6.

La figure 5 présente en détail un ensemble de turbines 26, aussi appelées éléments rotatifs ou hacheurs, disposées en couronne autour de la paroi 60 d'une veine de flux d'air froid, reliées chacune par un conduit 20 alimenté par un conduit circulaire 62 faisant le tour de la nacelle. Chaque turbine 26 est disposée au plus près de son diffuseur 28, qui est fixé directement sur la paroi extérieure 62.

En complément la nacelle du turboréacteur peut comporter sur ses parois des panneaux acoustiques présentant des résonateurs classiques, pour travailler sur l'atténuation de fréquences moyennes alors que le dispositif actif selon l'invention atténue des basses fréquences. De cette manière chaque dispositif est optimisé pour travailler sur ses propres gammes de fréquences.

On obtient de manière simple et efficace, avec un système consommant peu d'énergie, utilisant un débit d'air présentant une pression de l'ordre de 2 à 3 bars, une atténuation importante des niveaux d'émissions sonores de la soufflante 6 qui peuvent atteindre plus de 150dB.

L'invention est décrite dans ce qui précède à titre d'exemple. Il est entendu que l'homme du métier est à même de réaliser différentes variantes de réalisation de l'invention sans pour autant sortir du cadre de l'invention. une atténuation importante des niveaux d'émissions sonores de la soufflante 6 qui peuvent atteindre plus de 150dB.

L'invention est décrite dans ce qui précède à titre d'exemple. Il est entendu que l'homme du métier est à même de réaliser différentes variantes de réalisation de l'invention sans pour autant sortir du cadre de l'invention telle que définie dans les revendications.

## Revendications

1. Dispositif actif d'atténuation des émissions acoustiques tonales (8) d'une nacelle (8) de turboréacteur d'aéronef, ledit dispositif comportant des conduits de circulation (20) d'un débit d'air sous pression contrôlé alimentant des éléments rotatifs (26) du dispositif (8) comprenant chacun un système de pulsation de l'écoulement de l'air délivré, ces éléments rotatifs (26) contrôlés en vitesse et en position angulaire, délivrant à des diffuseurs de sortie (28) du dispositif (8) un débit d'air pulsé (18) avec une pulsation présentant une fréquence, une phase, et une amplitude ajustées de façon à minimiser la puissance acoustique rayonnée hors de la nacelle (8) et **caractérisé en ce que** les éléments rotatifs dits hacheurs (26) comportent en aval un manchon de sortie (32) présentant une géométrie de passage du débit d'air de sortie qui est réglable.

2. Dispositif actif d'atténuation des émissions acoustiques tonales (8) selon la revendication 1, **caractérisé en ce qu'**il comporte des capteurs (10) des ondes acoustiques dans la nacelle afin de calculer en temps réel la commande des éléments rotatifs dits hacheurs (26).

3. Dispositif actif d'atténuation des émissions acoustiques tonales (8) selon la revendication 1 ou 2, **caractérisé en ce qu'**il comporte des moyens de traitement d'une information (36) configurés pour donner l'angle de rotation de la motorisation du turboréacteur.

4. Dispositif actif d'atténuation des émissions acoustiques tonales (8) selon l'une quelconque des revendications précédentes, **caractérisé en ce que** chaque élément rotatif (26) est formé par un rotor (34) comprenant des fenêtres (54) de passage du débit d'air de sortie de cet élément rotatif (26).

5. Dispositif actif d'atténuation des émissions acoustiques tonales (8) selon la revendication 4, **caractérisé en ce que** le rotor (34) forme un tambour tournant suivant son axe, présentant une face transversale équipée de perçages d'entrée d'air (52) dans le tambour, les fenêtres (54) étant réparties sur le contour cylindrique de ce tambour.

6. Dispositif actif d'atténuation des émissions acoustiques tonales (8) selon l'une quelconque des revendications précédentes, **caractérisé en ce que** l'élément rotatif dit hacheur (26) est entraînée par un moteur électrique, ou un moteur pneumatique comportant un frein électromagnétique de régulation de vitesse.

7. Dispositif actif d'atténuation des émissions acoustiques tonales (8) selon l'une quelconque des revendications précédentes, **caractérisé en ce qu'**il comporte des vannes de régulation de débit (24) disposées en amont des éléments rotatifs (26).

8. Dispositif actif d'atténuation des émissions acoustiques tonales (8) selon l'une quelconque des revendications précédentes, **caractérisé en ce que** chaque élément rotatif (26) comporte en sortie un diffuseur (28) comprenant une fixation au dos d'une paroi (60), pour diffuser le débit d'air d'atténuation (18) devant cette paroi.

9. Dispositif actif d'atténuation des émissions acoustiques tonales (8) selon l'une quelconque des revendications précédentes, **caractérisé en ce qu'**il comprend une vanne de contrôle du débit d'air.

10. Nacelle de turboréacteur d'aéronef, **caractérisée en ce qu'**elle comporte un dispositif actif d'atténuation des émissions acoustiques tonales (8) selon l'une quelconque des revendications précédentes.

11. Nacelle selon la revendication 10, **caractérisé en ce que** le conduit de circulation (20) comporte une entrée d'air (22) prélevé sur un flux primaire de la motorisation du turboréacteur, sur un flux secondaire donné par une soufflante (6) d'un turboréacteur à double flux, ou sur une autre source comprenant un compresseur, un surpresseur, ou un accumulateur d'air comprimé.

12. Nacelle selon l'une des revendications 10 ou 11, **caractérisé en ce qu'**il comprend une pluralité de dispositifs actifs d'atténuation des émissions acoustiques tonales (8) disposés en couronne.

## Patentansprüche

1. Aktive Vorrichtung zum Dämpfen tonaler Schallemissionen (8) von einer Gondel (8) eines Flugzeugstrahltriebwerks, wobei die Vorrichtung Zirkulationskanäle (20) für einen kontrollierten drucklosen Luftstrom umfasst, der rotierende Elemente (26) der Vorrichtung (8) versorgt, die jeweils ein System zum Pulsieren des zugeführten Luftstroms umfassen, wobei diese rotierenden Elemente (26), die in Geschwindigkeit und Winkelposition gesteuert werden, einen gepulsten Luftstrom (18) mit einem Puls, dessen Frequenz, Phase und Amplitude so eingestellt sind, dass die aus der Gondel (8) abgestrahlte Schallleistung minimiert wird, an Auslassdiffusoren (28) der Vorrichtung (8) liefern, und **dadurch gekennzeichnet, dass** die rotierenden Elemente, die Zerhacker (26), stromabwärts einen Auslasskanal (32) mit einer Geometrie für den Durchgang für den Auslassluftstrom umfassen, die einstellbar ist.

2. Aktive Vorrichtung zum Dämpfen tonaler Schallemissionen (8) nach Anspruch 1, **dadurch gekennzeichnet, dass** sie Sensoren (10) der Schallwellen in der Gondel umfasst, um in Echtzeit die Steuerung der als Zerhacker (26) bezeichneten rotierenden Elemente zu berechnen.

3. Aktive Vorrichtung zum Dämpfen tonaler Schallemissionen (8) nach Anspruch 1 oder 2, **dadurch gekennzeichnet, dass** sie ein Informationsverarbeitungsmittel (36) umfasst, das dazu konfiguriert ist, den Rotationswinkel des Antriebs des Strahltriebwerks anzugeben.

4. Aktive Vorrichtung zum Dämpfen tonaler Schallemissionen (8) nach einem der vorhergehenden Ansprüche, **dadurch gekennzeichnet, dass** jedes rotierende Element (26) durch einen Rotor (34) gebildet ist, der Fenster (54) für den Durchlass des Auslassluftstroms dieses rotierenden Elements (26) umfasst.

5. Aktive Vorrichtung zum Dämpfen tonaler Schallemissionen (8) nach Anspruch 4, **dadurch gekennzeichnet, dass** der Rotor (34) eine Trommel bildet, die sich entlang ihrer Achse dreht, mit einer Querfläche, die mit Lufteinlassöffnungen (52) in der Trommel versehen ist, wobei die Fenster (54) über den zylindrischen Umfang dieser Trommel verteilt sind.

6. Aktive Vorrichtung zum Dämpfen tonaler Schallemissionen (8) nach einem der vorhergehenden Ansprüche, **dadurch gekennzeichnet, dass** das als Zerhacker bezeichnete rotierende Element (26) von einem Elektromotor oder einem pneumatischen Motor angetrieben wird, der eine elektromagnetische Bremse zur Geschwindigkeitsregulierung umfasst.

7. Aktive Vorrichtung zum Dämpfen tonaler Schallemissionen (8) nach einem der vorhergehenden Ansprüche, **dadurch gekennzeichnet, dass** sie Stromregelventile (24) umfasst, die stromaufwärts der rotierenden Elemente (26) angeordnet sind.

8. Aktive Vorrichtung zum Dämpfen tonaler Schallemissionen (8) nach einem der vorhergehenden Ansprüche, **dadurch gekennzeichnet, dass** jedes rotierende Element (26) am Auslass einen Diffusor (28) umfasst, der eine Befestigung an der Rückseite einer Wand (60) umfasst, um den Dämpfungsluftstrom (18) vor dieser Wand zu verteilen.

9. Aktive Vorrichtung zum Dämpfen tonaler Schallemissionen (8) nach einem der vorhergehenden Ansprüche, **dadurch gekennzeichnet, dass** sie ein Luftstromsteuerventil umfasst.

10. Gondel eines Flugzeugstrahltriebwerks, **dadurch gekennzeichnet, dass** sie eine aktive Vorrichtung zum Dämpfen tonaler Schallemissionen (8) nach einem der vorhergehenden Ansprüche umfasst.

11. Gondel nach Anspruch 10, **dadurch gekennzeichnet, dass** die Zirkulationsleitung (20) einen Lufteinlass (22) umfasst, der von einem Primärstrom des Antriebs des Strahltriebwerks, von einem Sekundärstrom, der von einem Gebläse (6) eines Zweikreis-Strahltriebwerks geliefert wird, oder an einer anderen Quelle, die einen Kompressor, einer Verstärkereinheit oder einen Druckluftspeicher umfasst, in Anspruch genommen wird.

12. Gondel nach einem der Ansprüche 10 oder 11, **dadurch gekennzeichnet, dass** sie eine Vielzahl von ringförmig angeordneten aktiven Vorrichtungen zum Dämpfen tonaler Schallemissionen (8) umfasst.

## Claims

1. An active device for attenuating tonal acoustic emissions (8) of a nacelle (8) of an aircraft turbojet engine, said device including circulation conduits (20) for controlled pressurized air flow rate supplying rotary elements (26) of the device (8) each comprising a system for pulsating the flow of the delivered air, these rotary elements (26) controlled in speed and in angular position, delivering to outlet diffusers (28) of the device (8) a pulsed air flow rate (18) with a pulsation having an adjusted frequency, phase, and amplitude so as to minimize the acoustic power radiated out of the nacelle (8) and **characterized in that** the rotary elements called choppers (26) include downstream an outlet sleeve (32) having a passage geometry for the output air flow rate which is adjustable.

2. The active device for attenuating tonal acoustic emissions (8) according to claim 1, **characterized in that** it includes sensors (10) of the acoustic waves in the nacelle in order to calculate in real time the control of the rotary elements called choppers (26).

3. The active device for attenuating tonal acoustic emissions (8) according to claim 1 or 2, **characterized in that** it includes means for processing an information (36) configured to give the angle of rotation of the motorization of the turbojet engine.

4. The active device for attenuating tonal acoustic emissions (8) according to any one of the preceding claims, **characterized in that** each rotary element (26) is formed by a rotor (34) comprising windows (54) for passage of the output air flow rate of this rotary element (26).

5. The active device for attenuating tonal acoustic emissions (8) according to claim 4, **characterized in that** the rotor (34) forms a drum rotating along its axis, having a transverse face equipped with air inlet holes (52) in the drum, the windows (54) being distributed over the cylindrical contour of this drum.

6. The active device for attenuating tonal acoustic emissions (8) according to any one of the preceding claims, **characterized in that** the rotary element called chopper (26) is driven by an electric motor, or a pneumatic motor including an electromagnetic speed regulation brake.

7. The active device for attenuating tonal acoustic emissions (8) according to any one of the preceding claims, **characterized in that** it includes flow rate control valves (24) arranged upstream of the rotary elements (26).

8. The active device for attenuating tonal acoustic emissions (8) according to any one of the preceding claims, **characterized in that** each rotary element (26) includes at the outlet a diffuser (28) comprising an attachment to the back of a wall (60), to diffuse the attenuating air flow rate (18) in front of this wall.

9. The active device for attenuating tonal acoustic emissions (8) according to any one of the preceding claims, **characterized in that** it comprises an air flow rate control valve.

10. An aircraft turbojet engine nacelle, **characterized in that** it includes an active device for attenuating tonal acoustic emissions (8) according to any one of the preceding claims.

11. The nacelle according to claim 10, **characterized in that** the circulation conduit (20) includes an air inlet (22) taken from a primary flow of the motorization of the turbojet engine, from a secondary flow given by a fan (6) of a bypass turbojet engine, or from another source comprising a compressor, a booster, or a compressed air accumulator.

12. The nacelle according to any of claims 10 or 11, **characterized in that** it comprises a plurality of active devices for attenuating tonal acoustic emissions (8) disposed in a ring.
